# EUROPÄISCHE PATENTSCHRIFT

(11) **EP 1 474 260 B1**
(45) Veröffentlichungstag und Bekanntmachung des Hinweises auf die Patenterteilung: **03.07.2013**
(21) Anmeldenummer: 02787353.8
(22) Anmeldetag: 06.11.2002
(51) Int. Cl.: B23K 1/005

(54) **VERFAHREN UND ANORDNUNG ZUR STRAHLUNGSHEIZUNG FÜR EIN MEHRKAMMER VAKUUM-LÖTSYSTEM**
RADIANT HEATING METHOD AND ASSEMBLY FOR A MULTI-CHAMBER VACUUM-SOLDERING SYSTEM
PROCEDE ET DISPOSITIF DE CHAUFFAGE PAR RAYONNEMENT DESTINE A UN SYSTEME DE BRASAGE SOUS VIDE A CHAMBRES MULTIPLES

(30) Priorität: 06.11.2001 DE 10153958
(43) Veröffentlichungstag der Anmeldung: 10.11.2004
(73) Patentinhaber: centrotherm thermal solutions GmbH + Co. KG, 89143 Blaubeuren (DE)
(72) Erfinder: REICHART, Johann, Georg, 89143 Blaubeuren (DE)
(74) Vertreter: Lippert, Stachow & Partner
(86) Internationale Anmeldenummer: PCT/DE2002/004118
(87) Internationale Veröffentlichungsnummer: WO 2003/039799

(56) Entgegenhaltungen:
- EP-A- 0 237 151
- WO-A-98/16344
- US-A- 3 792 230

## Beschreibung

Die Erfindung betrifft ein Verfahren und eine Anordnung zur Strahlungsheizung für ein Mehrkammer Vakuum-Lötsystem zum Vakuumlöten von Bauelementen auf Substraten in einer Vakuumkammer mit einer Heizeinrichtung und einer Einrichtung zum Transport der Substratträger.

Derartige Mehrkammer-Vakuum-Lötsysteme werden zum Vakuumlöten von Leistungshalbleitern, oder anderen Bauelementen auf DCB-Substraten unter Verwendung von Preforms, bestehen aus einem geeigneten Lötmaterial, oder Lötpasten eingesetzt. Hierfür Verwendung findende Mehrkammer Vakuum-Lötsysteme bestehen in der Hauptsache aus einer oder mehreren Vakuumkammern, einem geeigneten Transportsystem innerhalb der Kammern für den Transport der zu lötenden Bauelemente und einer Heizvorrichtung zum Aufheizen der zu lötenden Bauelemente auf die erforderliche Löttemperatur. Die Aufheizung der Bauelemente auf die erforderlichen Löttemperatur erfordert bei der Verwendung einer Strahlungsheizung einen erheblichen Energieaufwand, weil neben den zu lötenden Baugruppen auch die mit diesen in Kontakt stehenden Bauteile des Transportsystems ebenfalls mit aufgeheizt werden müssen.

Daraus resultiert das Problem, dass bei der Beschickung der Vakuum-Lötkammer diese geöffnet werden muss, wobei eine Abkühlung des Innenraumes der Vakuumkammer eintritt und nach dem Beschicken mit Bauelementen und dem Erzeugen des nötigen Vakuums die Bauelemente bis auf die Löttemperatur aufgeheizt werden müssen. Nachteil solcher Vakuumkammern ist der erforderliche hohe Energieeinsatz zum Erreichen der Löttemperatur, bedingt durch die nötige Aufheizung einer größeren Masse und der hiermit verbundene zeitaufwand.

In der US3064118 wird ein Ofen beschrieben, bei dem mit elektrischen Heizelementen Wärmestrahlung erzeugt wird und bei dem mittels Graphitplatten eine über die Fläche gleichmäßige Wärmeverteilung gewährleistet wird. Die elektrischen Heizelemente und die Graphitplatten sind innerhalb eines Retortenteils angeordnet, welches sich in einer evakuierbaren Hauptkammer befindet. Die gesamte Wärmestrahlung innerhalb der Vakuumkammer erzeugt und verteilt.

Aus der EP0829323 geht eine Infrarotheizung mit einer Heizplatte und einem Widerstandsheizelement in einer Wärmeplatte hervor. Er wird auch die Möglichkeit der Verwendung von Halogenlampen zu Heizzwecken beschrieben.

Schließlich wird in der GB971720 die Umwandlung von Wärmestrahlung einer elektrischen Widerstandsheizung in eine längerwellige Wärmestrahlung mittels eines schwarz lackierten Maschendrahtpanels beschrieben, welches fast die Eigenschaften eines schwarzen Festkörpers hat. Durch die niedrigere Temperatur des Panels strahlt dieses eine längewellige Wärmestrahlung ab.

Der Erfindung liegt daher die Aufgabe zugrunde, ein Verfahren und eine Anordnung zur Strahlungsheizung für ein Mehrkammer Vakuum-Lötsystem zu schaffen, das eine besonders schnelle und effektive Aufheizung der Substrate/Bauelemente ermöglicht.

Diese Aufgabe wird mit einem Verfahren gelöst, bei dem zunächst die kurzwellige Primärstrahlung außerhalb der Vakuumkammer erzeugt wird, die anschließend in die Vakuumkammer geleitet und dort durch einen schwarzen Strahler in eine langwellige Sekundärstrahlung zur Heizung der Substrate umgewandelt wird.

Dieses überraschend einfache Verfahren ermöglicht die effektive Aufheizung der Bauelemente, da kurzwellige Primärstrahlung mit üblichen Halogenleuchten erzeugt werden kann und für die Umwandlung in langwellige Sekundärstrahlung lediglich ein geeigneter Strahler erforderlich ist.

In Fortführung der Erfindung erfolgt die Umwandlung der kurzwelligen Primärstrahlung in langwellige Sekundärstrahlung durch einen schwarzen Strahler mit geringer Masse.

Um eine besonders schnelle und verlustarme Aufheizung der zu lötenden Bauelemente zu erreichen, ist es von Vorteil, wenn der schwarze Strahler in unmittelbarer Nähe der zu erwärmenden Bauelemente angeordnet wird.

Die der Erfindung zugrunde liegende Aufgabe wird ferner durch eine Vorrichtung mit einer Vakuumkammer, einer Anordnung zum Transport von Substratträgern durch die Vakuumkammer und einer Heizeinrichtung, sowie einer Einrichtung zur Erzeugung kurzwelliger Strahlung dadurch gelöst, dass die Heizeinrichtung aus einem Strahler außerhalb der Vakuumkammer zur Erzeugung der kurzwelligen Primärstrahlung besteht, die durch eine Quarzplatte auf einen schwarzen Strahler in der Vakuumkammer strahlt, der die kurzwellige Primärstrahlung in eine langwellige Sekundärstrahlung umwandelt und der unmittelbar unter dem Substratträger angeordnet ist.

Der schwarze Strahler kann vorteilhaft aus einer Graphitplatte hergestellt werden, was den Vorteil der besonders geringen Masse bietet, so dass Heiz- und Abkühlvorgänge besonders schnell realisiert werden können.

In einer weiteren Ausgestaltung der Erfindung besteht der Strahler zur Erzeugung der kurzwelligen Primärstrahlung aus wenigstens einer, bevorzugt jedoch mehreren Halogenlampen. Für Wartungszecke ist es von Vorteil, wenn die Strahler zur Erzeugung der kurzwelligen Primärstrahlung unterhalb der Vakuumkammer angeordnet werden.

In einer besonders zweckmäßigen Ausgestaltung ist der Boden der Vakuumkammer mit einer Quarzplatte verschlossen, welche die Vakuumkammer mittels Dichtelementen dicht nach unten abschließt und wobei die kurzwellige Strahlung durch die Quarzplatte in die Vakuumkammer geleitet wird.

Um Energieverluste zu vermeiden, sieht eine weitere Ausgestaltung der Erfindung vor, dass unterhalb der kurzwelligen Strahler ein Strahlungsreflektor angeordnet wird, welcher die sonst ungenutzte Strahlungsenergie durch die Quarzplatte in die Vakuumkammer auf die Graphitplatte reflektiert.

Durch die Erfindung ist es möglich, die Energie kurzwelliger Primärstrahlung z. B. von Halogenlampen wird durch die Quarzplatte in den (massearmen) schwarzen Strahler in der Vakuumkammer einzuleiten, der Strahlungsenergie der kurzwelligen Primärstrahlung in langwellige Sekundärstrahlung umwandelt und diese langwellige Strahlung auf das Bauelement/Substrat zu leiten.

Der besondere Vorteil dieser Lösung ist darin zu sehen, dass massearme Strahler (Graphitplatte) sehr schnell aufgeheizt und abgekühlt werden kann, wodurch ein wesentlich effektiverer Betrieb des Mehrkammer-Lötsystems möglich ist.

Die Erfindung soll nachfolgend an einem Ausführungsbeispiel näher erläutert werden. In den zugehörigen Zeichnungen zeigen:

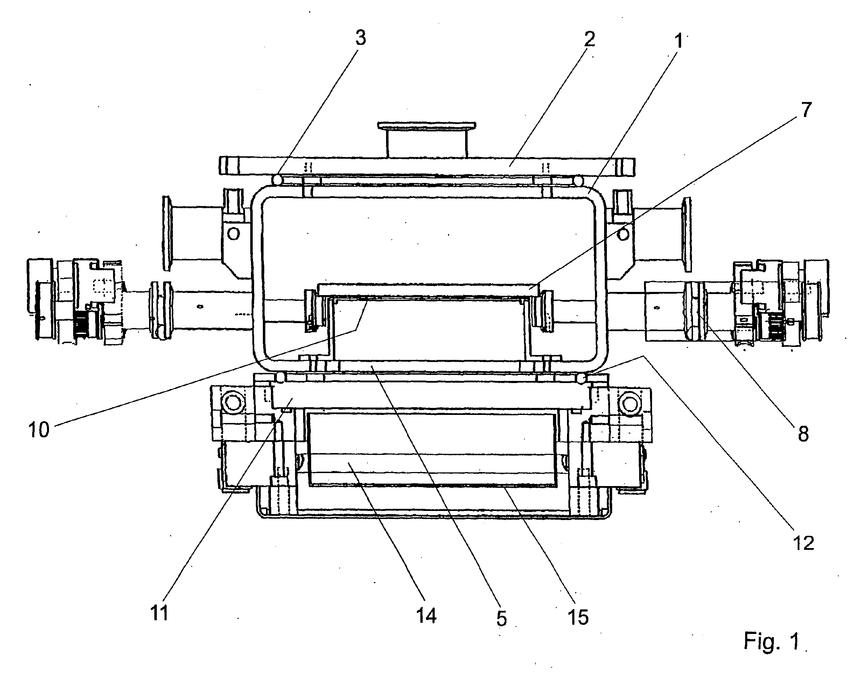

- Fig. 1: eine schematische Vorderansicht eines geöffneten Mehrkammer-Lötsystems mit einer erfindungsgemäßen Strahlungsheizung; und

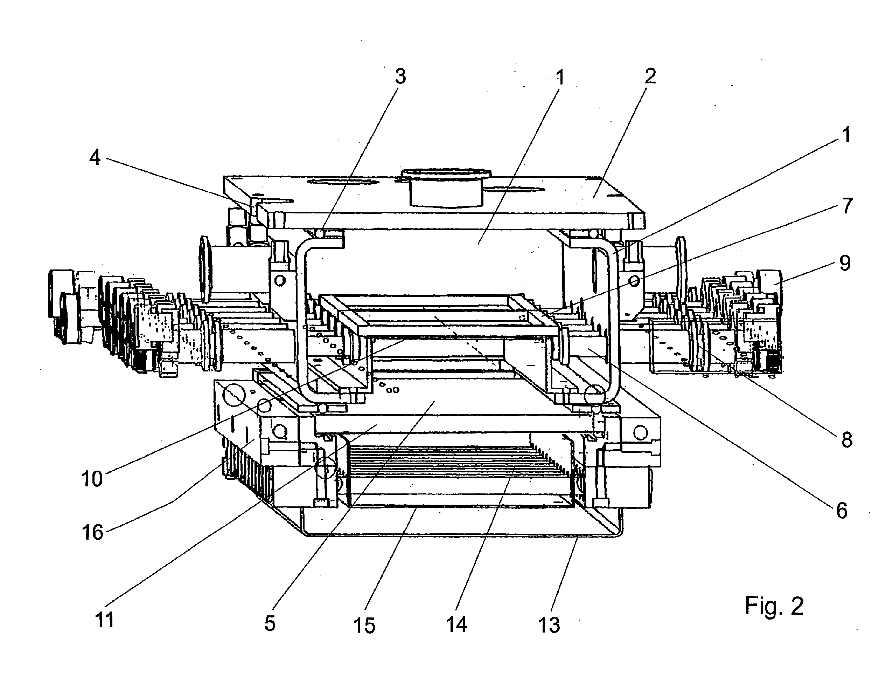

- Fig. 2: eine perspektivische Darstellung des Mehrkammer-Lötsystems nach Fig. 1.

Das Mehrkammer Vakuum-Lötsystem besteht aus drei Kammern, mit denen ein halb-kontinuierliches Vakuumlöten von Bauelementen möglich ist. In den Zeichnungsfiguren ist nur eine der Vakuumkammern 1 dargestellt, in der der eigentliche Vakuumlötvorgang der Baugruppen stattfindet. Ansonsten besteht das Vakuum Mehrkammer-Lötsystem aus den nacheinander angeordneten Baugruppen Einlauftisch, Aufheizkammer; Prozesskammer Abkühlkammer und Auslauftisch. Die Verbindung der drei Kammern miteinander erfolgt über nicht dargestellte Vakuumschieber.

Die Aufheizkammer und die Prozesskammer sind gleich aufgebaut und werden daher nachfolgend nur als Vakuumkammer 1 bezeichnet.

Diese Vakuumkammer 1 ist zeichnungsgemäß oben mit einem Servicedeckel 2 versehen, der über Dichtungen 3 und eine Spannvorrichtung 4 auf der Vakuumkammer 1 befestigt ist und unten mit einer großflächigen Öffnung 5 . In der Vakuumkammer 1 befindet sich eine Transporteinheit 6 zum Transport der Bauelemente (nicht dargestellt) auf einem Substratträger 7 in die Vakuumkammer 1 und aus dieser heraus. Diese Transporteinheit 6 wird über Drehdurchführungen 8 und eine außerhalb der Vakuumkammer 1 befindliche Antriebseinheit 9 betätigt.

Weiterhin befindet sich unter dem Substratträger 7 eine Graphitplatte 10 als schwarzer Strahler zur Umwandlung kurzwelliger Primärstrahlung in eine langwellige Sekundärstrahlung.

Wie aus den Zeichnungsfiguren weiterhin ersichtlich ist, ist die untere Öffnung 5 der Vakuumkammer 1 mit einer Quarzplatte 11 und Dichtelemente 12 vakuumdicht verschlossen.

Unterhalb der Vakuumkammer 1 befindet sich ein Gehäuse 13 zur Aufnahme von Strahlern 14 zu Erzeugung einer kurzwelligen Primärstrahlung, die über eine Anschlusseinheit 15 mit elektrischer Energie versorgt werden. Diese Strahler 14 können mehrere nebeneinender angeordnete Halogenstrahler sein.

Die von diesen Strahlern 14 erzeugte kurzwellige Strahlung strahlt durch die Quarzplatte 11 in die Vakuumkammer 1 und dort direkt auf die Graphitplatte 10, welche die kurzwellige Strahlung absorbiert und die Strahlungsenergie in langwellige Strahlung umwandelt und die auf der Transporteinheit befindlichen Bauelemente/Substrate aufheizt. Um die von den Strahlern 14 erzeugte kurzwellige Strahlung möglichst maximal ausnutzen zu können, ist unter diesen im Gehäuse 13 ein Reflektor 15 angeordnet. Für den elektrischen Anschluss der Strahler 14 ist außerhalb des Gehäuses 13 eine elektrische Anschlusseinheit 16 vorgesehen.

Der besondere Vorteil dieser Konstruktion ist darin zu sehen, dass die Umwandlung der kurzwelligen Strahlung in langwellige Strahlung durch die sehr geringe Masse der Graphitplatte 10 äußerst schnell erfolgen kann und dass die Strahler 11 sehr leicht gewartet werden können, ohne dass die Vakuumkammer 1 geöffnet werden muss. Die Wärmeeinkopplung in die Vakuumkammer 1 erfolgt über die Quarzplatte 11, wobei nur die Unterseite der Bauelemente/Substrate schließlich durch die besonders gleichmäßig und tief wirkende langwellige Sekundärstrahlung der Graphitplatte (schwarzer Strahler) angestrahlt werden.

**Bezugszeichenliste**

| | |
|---|---|
| 1 | Vakuumkammer |
| 2 | Servicedeckel |
| 3 | Dichtung |
| 4 | Spannvorrichtung |
| 5 | Öffnung |
| 6 | Transporteinheit |
| 7 | Substratträger/Bauelementeträger |
| 8 | Drehdurchführungen |
| 9 | Antriebseinheit |
| 10 | Graphitplatte |
| 11 | Quarzplatte |
| 12 | Dichtelement |
| 13 | Gehäuse |
| 14 | Strahler |
| 15 | Reflektor |
| 16 | elektrische Anschlusseinheit |

## Patentansprüche

1. Verfahren zur Strahlungsheizung für ein Mehrkammer Vakuum-Lötsystem zum Vakuumlöten von Bauelementen auf Substraten in einer Vakuumkammer mit einer Heizeinrichtung und einer Einrichtung zum Transport des Substratträger, bei dem eine Umwandlung kurzwelliger Strahlung in langwellige Strahlung erfolgt, **dadurch gekennzeichnet**, das zunächst die kurzwellige Primärstrahlung außerhalb der Vakuumkammer (1) erzeugt wird, die anschließend in die Vakuumkammer (1) geleitet und dort durch einen schwarzen Strahler in eine langwellige Sekundärstrahlung zur Heizung der Bauelemente/Substrate umgewandelt wird.

2. Verfahren nach Anspruch 1 **dadurch gekennzeichnet, dass** die Umwandlung der kurzwelligen Strahlung in langwellige Strahlung durch einen schwarzen Strahler mit geringer Masse erfolgt.

3. Verfahren nach Anspruch 1 und 2, **dadurch gekennzeichnet, dass** sich der schwarze Strahler in unmittelbarer Nähe der zu erwärmenden Bauelemente/Substrate befindet.

4. Vorrichtung zur Durchführung des Verfahrens nach den Ansprüchen 1 bis 3, mit einer Vakuumkammer, einer Anordnung zum Transport von Substratträgern durch die Vakuumkammer und einer Heizeinrichtung zur Erzeugung kurzwelliger Strahlung, **dadurch gekennzeichnet, dass** die Heizeinrichtung aus einem Strahler (14) außerhalb der Vakuumkammer (1) zur Erzeugung der kurzwelligen Primärstrahlung besteht, die durch eine Quarzplatte (11) auf einen schwarzen Strahler in der Vakuumkammer (1) strahlt, der die kurzwellige Primärstrahlung in eine langwellige Sekundärstrahlung umwandelt und der unmittelbar unter dem Substratträger (7) angeordnet ist.

5. Vorrichtung nach Anspruch 4, **dadurch gekennzeichnet, dass** der schwarze Strahler aus einer Graphitplatte (10) besteht.

6. Vorrichtung nach Anspruch 4, **dadurch gekennzeichnet**, das der Strahler (14) zur Erzeugung der kurzwelligen Primärstrahlung aus Halogenlampen besteht.

7. Vorrichtung nach Anspruch 4 bis 6, **dadurch gekennzeichnet, dass** der Strahler (14) unterhalb [S. 5, Z. 16] der Vakuumkammer (1) angeordnet ist.

8. Vorrichtung nach Anspruch 7, **dadurch gekennzeichnet, dass** der Boden der Vakuumkammer (1) mit einer Quarzplatte (11) verschlossen ist, welche die Vakuumkammer (1) mittels Dichtelemente (12) dicht nach unten abschließt und dass die kurzwellige Strahlung durch die Quarzplatte (11) in die Vakuumkammer (1) strahlt.

9. Vorrichtung nach einem der Ansprüche 4 bis 8, **dadurch gekennzeichnet**, das unterhalb der kurzwelligen Strahler (14) ein Strahlungsreflektor (15) angeordnet ist.

## Claims

1. Method for radiant heating for a multi-chamber vacuum-soldering system for the vacuum soldering of components on substrates in a vacuum chamber, having a heating device and a device for transporting the substrate carrier in the case of which short-wave radiation is converted into long-wave radiation, **characterized in that** firstly the short-wave primary radiation is produced outside the vacuum chamber (1) and is subsequently led into the vacuum chamber (1) and converted there by a black-body radiator into long-wave secondary radiation in order to heat the components/substrates.

2. Method according to Claim 1, **characterized in that** the conversion of the short-wave radiation into long-wave radiation is performed by a black-body radiator of low mass.

3. Method according to Claims 1 and 2, **characterized in that** the black-body radiator is located in the immediate vicinity of the components/substrates to be heated.

4. Device for carrying out the method according to Claims 1 to 3, having a vacuum chamber, an arrangement for transporting substrate carriers through the vacuum chamber, and a heating device for producing short-wave radiation, **characterized in that** the heating device comprises a radiator (14) outside the vacuum chamber (1) for producing the short-wave primary radiation which radiates through a quartz plate (11) onto a black-body radiator in the vacuum chamber (1), which converts the short-wave primary radiation into a long-wave secondary radiation, and is arranged directly below the substrate carrier (7).

5. Device according to Claim 4, **characterized in that** the black-body radiator consists of a graphite plate (10).

6. Device according to Claim 4, **characterized in that** the radiator (14) for producing the short-wave primary radiation consists of halogen lamps.

7. Device according to Claims 4 to 6, **characterized in that** the radiator (14) is arranged beneath [p. 5, 1. 16] the vacuum chamber (1).

8. Device according to Claim 7, **characterized in that** the bottom of the vacuum chamber (1) is sealed with a quartz plate (11) which tightly seals off the vacuum chamber (1) downward by means of sealing elements (12), and **in that** the short-wave radiation radiates into the vacuum chamber (1) through the quartz plate (11).

9. Device according to one of Claims 4 to 8, **characterized in that** a radiation reflector (15) is arranged beneath the short-wave radiator (14).

## Revendications

1. Procédé de chauffage radiant d'un système de brasage à plusieurs chambres sous vide servant à braser sous vide des composants sur un substrat dans une chambre sous vide qui présente un dispositif de chauffage et un dispositif de transport de supports de substrat, le procédé recourant à une conversion d'un rayonnement à courtes longueurs d'onde en un rayonnement à longues longueurs d'onde,
**caractérisé en ce que**
le rayonnement primaire à courtes longueurs d'onde est d'abord produit à l'extérieur de la chambre sous vide (1) et est ensuite amené dans la chambre sous vide (1) pour y être converti par un émetteur noir de rayonnement en un rayonnement secondaire à longues longueurs d'onde qui chauffe les composants et/ou les substrats.

2. Procédé selon la revendication 1, **caractérisé en ce que** la conversion du rayonnement primaire à courtes longueurs d'onde en un rayonnement secondaire à longues longueurs d'onde s'effectue à l'aide d'un émetteur noir de rayonnement à faible masse.

3. Procédé selon les revendications 1 ou 2, **caractérisé en ce que** l'émetteur noir de rayonnement est disposé à proximité immédiate des composants et/ou des substrats à chauffer.

4. Ensemble servant à mettre en oeuvre le procédé selon les revendications 1 à 3, l'ensemble présentant une chambre sous vide, un agencement de transport de supports de substrat dans la chambre sous vide et un dispositif de chauffage qui émet un rayonnement à courtes longueurs d'onde,
**caractérisé en ce que**
le dispositif de chauffage est constitué d'un émetteur (14) de rayonnement qui est disposé à l'extérieur de la chambre sous vide (1) et qui produit le rayonnement primaire à courtes longueurs d'onde qui irradie à travers une plaque (11) en quartz un émetteur noir de rayonnement qui est disposé dans la chambre sous vide (1), qui convertit le rayonnement primaire à courtes longueurs d'onde en un rayonnement secondaire à longues longueurs d'onde et qui est disposé immédiatement en dessous du support (7) de substrats.

5. Dispositif selon la revendication 4, **caractérisé en ce que** l'émetteur noir de rayonnement est constitué d'une plaque (10) en graphite.

6. Dispositif selon la revendication 4, **caractérisé en ce que** l'émetteur (14) noir de rayonnement qui produit le rayonnement primaire à courtes longueurs d'onde est constitué de lampes à halogène.

7. Dispositif selon les revendications 4 à 6, **caractérisé en ce que** l'émetteur (14) noir de rayonnement est disposé en dessous de la chambre sous vide (1) [voir page 5 ligne 16].

8. Dispositif selon la revendication 7, **caractérisé en ce que** le fond de la chambre sous vide (1) est fermé par une plaque (11) en quartz qui assure l'étanchéité du bas de la chambre sous vide (1) vis-à-vis de l'extérieur au moyen d'éléments d'étanchéité (12) et **en ce que** le rayonnement à courtes longueurs d'onde irradie la chambre sous vide (1) à travers la plaque (11) en quartz.

9. Dispositif selon l'une des revendications 4 à 8, **caractérisé en ce qu'**un réflecteur (15) de rayonnement est disposé en dessous de l'émetteur (14) de rayonnement.
